# EUROPEAN PATENT SPECIFICATION

(11) **EP 3 386 316 B1**
(45) Date of publication and mention of the grant of the patent: **01.04.2020**
(21) Application number: 16784546.0
(22) Date of filing: 03.10.2016
(51) Int. Cl.: A23J 1/20, A23J 3/08, A23J 3/10, A23L 33/18, A23C 21/06

(54) **COMPOSITIONS**
ZUSAMMENSETZUNGEN
COMPOSITIONS

(30) Priority: 09.10.2015 GB 201517892
(43) Date of publication of application: 17.10.2018
(73) Proprietor: SIS (Science In Sport) Limited, Farringdon, London EC1N 8AT (GB)
(72) Inventor: HEENEY, Luke, Kesgrave Ipswich IP5 2YA (GB); LOMBARD, Fiachra, Bolton BL7 9NY (GB)
(74) Representative: Banford, Paul Clifford
(86) International application number: PCT/GB2016/000177
(87) International publication number: WO 2017/060663

(56) References cited:
- EP-A1- 2 873 331
- WO-A1-01/22837
- WO-A1-2008/092458
- WO-A1-2015/059248
- WO-A2-02/15720

## Description

The present invention concerns compositions comprising whey proteins and methods for the manufacture of such compositions. In particular, the present invention relates to compositions that may be consumed by sports people, and others, who need to develop and maintain muscle mass.

It is well known that an adequate supply of essential amino acids is important when developing muscle tissue and a number of products containing protein or amino acids are available to those wishing to develop or maintain muscle tissue.

Curds and whey are dairy products obtained by coagulating milk in a process called curdling. The curd fraction comprises casein milk proteins (which tangle into solid masses known as curds) and comprises about 80% by weight of the total protein in milk whereas the whey comprises whey protein and makes up about 20% by weight of the total protein in milk.

Whey protein is rich in leucine and other essential branched chain amino acids (BCAAs) and contains the highest known levels of BCAAs in any natural protein resource. BCAAs are important for athletes and subjects suffering from muscle degeneration, because, unlike other essential amino acids, they are metabolized in the muscle tissue. Whey protein is therefore considered a good source of protein for those wishing to develop and maintain muscle tissue. Given the benefits of whey protein, it has become a popular ingredient in the form of whey protein supplemented food bars, whey beverages, and in whey protein powders. For example, the applicant markets a product (SiS Whey high protein formula) which was created to support lean muscle development and to help promote training, adaptation and recovery after exercise. The product formulation provides a source of rapidly digesting protein, with an amino acid profile which supports lean muscle growth and maintenance. The product comprises at least 5g of BCAAs per serving.

25g of protein is the amount required to maximally stimulate the rate of muscle protein synthesis and a graduated intake of about 20-25g every 3-4 hours throughout the day is recommended by sports nutritionists and physicians to support lean muscle mass.

The whey protein products currently on the market are primarily powders comprising whey protein (to be mixed by the user) or products into which such powders have been dissolved (e.g. beverages) or disbursed (e.g. food bars with powders mixed in). Such products are appreciated by consumers. However, market research conducted by the applicant has established that consumers, and particularly athletes with busy training schedules, would appreciate a ready-to-consume product that is of a conveniently small volume and which can be easily consumed, but which will contain about 20-25g of total protein.

The applicant realized that such a ready-to-consume product may conveniently be a viscous liquid with a consistency somewhere between water and a gel. Such viscous liquids are flowable, easy to ingest and easy to swallow whereas compositions with the consistency of a beverage are easily spilt and not suited for containment in squeezable packaging and the like. However, a viscous liquid may be packaged in small squeezable sachets and would be of great convenience for consumption "on the go". The applicant also realized that proteins, and particularly whey proteins, can be very difficult to keep dissolved in a viscous liquid or gel at high concentrations and are also prone to come out of solution when heated or when the pH is lowered. It will be appreciated that heating steps and acidification are commonly required in the manufacture of nutritional products. Accordingly the inventors were not surprised to find that no useful ready-to-consume viscous fluid/gel products exist on the market that comprise a high proportion of total protein and in particular a high proportion of whey protein.

Aria Foods Ltd started marketing a 200g pot of yoghurt in the United Kingdom in January 2015. The yoghurt known as "Aria Protein 20g" is marketed as delivering an optimal dose of protein for people in training. The product comprises quark (a curd derivative) as the source of protein and also has the disadvantage that it represents a relatively high volume product (approximately 200mls) which only contains about 10% w/w of total protein and which also needs to be kept refrigerated. Furthermore, the product is a set yoghurt and therefore does not have the flowable properties that the applicant has identified as being desirable in a ready-to-consume product. Therefore, the Aria product does not address the need which has been identified by the applicant because the product is unsuitable for use "on the go".

EP2120591A discloses a yoghurt drink comprising casein and whey protein in a casein: whey protein ratio of from 4:96 to 12:88 (w/w). However, the drink only comprises a total protein concentration in the range from about 1% (w/w) to about 3% (w/w) and is not suited as a means of providing 20-25g protein in a small volume.

WO2013/028547 (MusclePharm Corporation) discloses food supplement compositions for use in promoting lean body mass with defined ratios of amino acids and which they suggest may be formulated as a gel. Furthermore, example 2 of WO2013/028547 appears to be the script from some sort of press release, but does disclose that a prior art product called, MuscleGel® is a gel that provides 22 grams of whey isolate per serving. However there is no disclosure at all with regards what the actual composition of such a gel product may be, how it may be made and what the volume of the product may be. In fact the inventors have reviewed a MuscleGel® product (known as MuscleGel® Shot) that is on the market and have noted that the 22 grams of protein contained within the product is primarily collagen and the product only contains a minor component of whey isolate. Accordingly this product does not address the need to provide, nor does WO2013/028547 adequately disclose, a liquid nutritional composition which comprises a high concentration of whey protein. Furthermore WO2013/028547 does not disclose a composition with a consistency that would be suited for use in a squeezable sachet. The inventors have analysed the MuscleGel® Shot product (i.e. a product primarily containing collagen) and have noted that it has a highly fluid consistency (as discussed below). Accordingly the product and WO2013/028547 fail to solve the problem of providing a high concentration of whey protein in a liquid which has a consistency that makes it best suited to be in a squeezable sachet.

WO 02/15720 A2 discloses a liquid formula comprising 7.5% casein and 7.5% whey protein isolate for a total protein of 15%.

EP 2 873 331 A1 discloses a food composition wherein the amount of whey protein isolate relative to non-denatured casein is in a ratio of 1:1.5 to about 1.5:1 and wherein the total protein content of eth composition is 50% or more of the composition by weight.

It is therefore an object of the present invention to address the short falls mentioned above, and other problems associated with the state of the art, and provide a liquid composition which comprises at least about 20% (w/w) total protein and wherein in at least half of the total protein is whey protein.

According to a first aspect of the invention there is provided a liquid nutritional composition comprising at least about 20% (w/w of the composition) total protein, about 10 - 40% (w/w of the composition) of whey protein, and about 1 -12% (w/w of the composition) of casein.

By "total protein" we mean protein, peptides and amino acids within the composition. The total protein should comprise at least 50% (w/w) whey protein and casein, preferably comprises at least 70% (w/w) whey protein and casein and more preferably comprises at least 85% (w/w) whey protein and casein. Other proteins that may be included in the total protein include albumin and collagen. In a preferred embodiment at least 95% (w/w) of total protein is whey protein and casein and in a most preferred embodiment essentially all (e.g. 98%, 99% or 100%) of the total protein content is whey protein and casein.

By "Whey protein" we mean a collection of globular proteins that can be isolated from liquid whey. It is typically a mixture of beta-lactoglobulin, alpha-lactalbumin and serum albumin which are soluble in their native forms, independent of pH.

By "Casein" we mean the most predominant phosphoprotein found in milk curd and cheese.

By "liquid nutritional composition" we mean an edible, flowable liquid that preferably has a consistency which allows the composition to be readily consumed by squeezing the composition out of packaging. The composition may be a viscous liquid or hydrous gel that may be readily squeezed from packaging.

Liquid nutritional compositions are typically prepared by mixing ingredients in reaction vessels However it is often difficult to mix the ingredients without clumps forming which lead to the formation of lumpy end products. This risk of clumping is even greater when a product contains proteins and the inventors have found that mixing of a product is even more problematic when a high concentration of total protein (for instance over 20%w/w) is desired and particularly problematic when a product is required that comprises 10% (w/w) or more (for instance 15% or 20%) of Whey protein. Foaming is also a problem when mixing proteins into a liquid. A skilled person will also appreciate that food manufacturing processes will almost inevitably involve heating and acidification steps and that proteins are also susceptible to clumping and other forms of degradation when heated or acidified in the manufacturing process. Accordingly, it will be appreciated that the manufacture of liquid nutritional compositions comprising high concentrations of whey protein represents a significant technical challenge.

The inventors attempted to make high protein liquid products using proteins from a number of different sources and in varying amounts, but were for some time unsuccessful in making a product with the consistency required for a product to be used "on the go". They were surprised when experiments with mixes of whey protein and casein did result in a product that had the desired consistency (i.e. a free-flowing product which is thickened relative to water and which at the same time does not suffer from clumping in the production process). The inventors then realized that it is possible to incorporate a high proportion of whey protein into a composition by also including casein in the composition. It will be appreciated that casein is the main component of curds when milk is coagulated to form curds and whey. The inventors have therefore surprisingly established that recombining components found in whole milk allow the production of a liquid, and most preferably a viscous liquid or gel, composition comprising 10 - 40% by weight of whey protein. The inventors do not wish to be bound by any hypothesis but they believe that the casein helps to stabilize the whey protein and thereby makes it possible to expose the whey protein to mixing, heating and acidification steps which are required steps in the manufacture of a product, but without compromising the quality of the product. The inventors also believe that the inclusion of casein contributes to compositions according to the invention have preferred consistencies as discussed below.

The inventors also realized that compositions according to the first aspect of the invention should preferably have a viscosity/consistency which allows the composition to be readily consumed by squeezing the composition out of packaging. The inventors used a Bostwick Consistometer (a device well known in the art) to assess the consistency of compositions they were developing. It is preferred that a composition according to the invention flows less than 20cms (after 30 seconds, at 20°C), more preferred that a composition according to the invention flows less than 15cms.

The composition may flow 5 - 15 cms (after 30 seconds, at 20°C) on a Bostwick Consistometer and more preferably may flow 6 - 14 cms.

In one embodiment, wherein the composition has just been manufactured, a composition may flow 8-14 cms and more preferably 12.5 ± 1cm on a Bostwick Consistometer. For instance, the composition may flow about 12.6 cms on a Bostwick Consistometer.

The inventors have also found that, after packaging, the composition may advantageously thicken during the valid shelf-life of a product. This thickening maintains, or may even improve, a good "squeezable" consistency of the composition. The inventors have found that during the shelf-life of a product comprising the composition, that, when tested, a composition may flow less than 10cms (after 30 seconds, at 20°C) on a Bostwick Consistometer. Such a composition may flow between about 5 and 10cms. For instance such a composition may flow about 7.5cms or 6.0cms ± 1cm on a Bostwick Consistometer (after 30 seconds, at 20°C).

The inventors found that compositions with these preferred consistencies are ideally suited for filling a sachet, may be easily squeezed from the sachet when used by a person (even in the middle of exercise or even if bed-bound) and have a good mouth feel. The inventors therefore endeavored, as described below, to develop compositions according to the invention with these preferred consistencies. These consistencies are in contrast with the consistencies of the "Arla Protein 20g" yoghurt which is set and does not flow at all and the MusclePharm MuscleGel® Shot product which had a flow rate of 26cms (after 30 seconds, at 20°C). This illustrates that the MusclePharm product is very fluid and poorly suited to being used as a squeezable product. Highly fluid compositions, such as the MusclePharm product are easily spilt when a sachet containing the same is opened and particularly when such a sachet is squeezed.

### Whey Protein used in compositions according to the invention

It will be appreciated that whey can be treated to prepare a modified whey, a whey protein isolate or whey protein concentrate with different characteristics. Many different sources of whey protein may be used according to the invention. Preferred whey proteins are described below.

Whey proteins used in the composition of the invention may be soluble over a wide pH-range. It is preferred that the whey protein used is stable at or below pH 6, more preferred that it is stable at or below pH 5 and most preferred that the whey protein is stable around between pH 3.5 and 4.2.

Whey proteins used in the composition of the invention should also be heat stable. The proteins should be at least heat stable at 60°C, more preferably at 70°C and it is even more preferred that the whey proteins are stable at 80°C. In one embodiment the whey protein is stable at 135°C (i.e. UHT conditions).

It is preferred that the whey proteins have a low bitterness profile and more preferred that they have a neutral taste.

It is preferred that the whey protein is partially hydrolysed, more preferred that the whey protein has a degree of hydrolysis (DH) of between 6 and 12 and most preferred that the whey protein has a DH of about 9.

A whey protein isolate may be used. By the term "whey protein isolate (WPI)" we mean the dry portion of whey obtained by the removal of non-protein constituents from whey so that the dry whey product contains more than 80% by weight of whey protein and more preferably about 90% by weight of whey protein on DS% basis. A preferred whey protein isolate for use according to the invention is LACPRODAN® HYDRO.Gel which is available from Aria Foods Ingredients, Denmark.

The whey protein content of the composition according to the first aspect of the invention should be greater than any other protein constituent of the composition. The whey protein may comprise 50%, 60%, 70% or more of the total protein. It is preferred that the whey protein comprises 65 - 85% of total protein and more preferably 70 - 80% of total protein.

The whey protein may advantageously be in the range of 10-40% (w/w) of the composition. In some embodiments the whey protein may comprise about 12 - 30% (w/w) of the composition or more preferably about 15 - 25% (w/w) of the composition.

It is preferred that whey protein comprises 12 - 20% (w/w) of the composition, preferably 14 - 19% (w/w) of the composition, and more preferred whey protein comprises about 16 - 19% (w/w) of the composition. In one preferred embodiment whey protein comprises about 16.5 -18.5% (w/w) of the composition. In most preferred embodiments the whey protein comprises between 17.0 -18.0% (w/w) of the composition (e.g. 17.3% or 17.4% as illustrated in the examples).

It will be appreciated that the source ingredient containing the whey protein may not exclusively comprise whey protein. For instance LACPRODAN® HYDRO.Gel comprises 86% protein "as is" or 91% d.m. A skilled person will appreciate that the amount of LACPRODAN® HYDRO.Gel that is used will need to be adjusted to achieve the required % (w/w) of whey protein.

### Casein used in compositions according to the invention

Casein used according to the invention is preferably derived from mammalian milk and may be conveniently derived from cow's milk.

Casein used according to the invention may be derived from the curd fraction when coagulating milk.

In one embodiment the casein can be purified from milk such that the protein is in essentially pure form. In other embodiments the casein may be contained within a milk extract. For instance, it is preferred that the source of casein used to make compositions according to the first aspect of the invention is quark.

Quark is a curd cheese made by warming soured milk until a desired amount of curdling occurs (the curds/quark is then strained or skimmed to separate the curd cheese from the whey). Traditionally quark is made without rennet although in some dairies quark can be produced by using rennet.

It is preferred that a dried/powdered quark is used in the composition according to the first aspect of the invention. Such dried/powdered quark may comprise at least 50% casein (w/w), preferably comprises at least 60% casein (w/w) and more preferably comprises about 70% casein (w/w) or more. The skilled person will appreciate that powdered quark can be produced by conventional means (e.g. spray-drying) and may be sourced from a number of suppliers. For instance a preferred source of casein for use in the composition is a spray-dried powder of pure skim quark available from Molda (composition published by Molda under specification 840150001).

The casein content of the composition according to the first aspect of the invention should be less than the whey protein content of the composition. The casein may comprise 45%, 40%, 30%, 20% or less of the total protein. It is preferred that casein comprises 15 - 35% of total protein and more preferably 20 - 30% of total protein.

Casein content of the composition according to the first aspect of the invention may advantageously be in the range of 1-12% (w/w). In some embodiments casein may comprise about 2 - 10% (w/w) of the composition, or about 3 - 7% (w/w) of the composition, or about 4-6% (w/w) of the composition.

It will be appreciated that the source ingredient containing the casein may not exclusively comprise casein. For instance the preferred spray-dried powder of pure skim quark from Molda comprises 70.3% d.m. casein. A skilled person will appreciate that the exact amount of quark powder that is used will need to be adjusted to achieve the required % (w/w) of casein.

### Other ingredients

It will be appreciated that the liquid base for compositions according to the invention will be water. The inventors have found that "soft" local water may be used as the liquid base. However, it is preferred that deionised water is used. The inventors have found that it is particularly important to use deionised water if the local water is "hard" (i.e. 50-100 ppm calcium). This is because they have found that hard water has a disadvantageous impact on the consistency of compositions according to the invention.

The exact water content of the composition will depend upon the desired consistency of the product and the choice of other ingredients. Nevertheless the final composition will comprise at least 50% (w/w) of water, more preferably at least 60% (w/w) of water and preferably about 70% (w/w) of water. The water content may be 65-75% (w/w), more preferably 67.5-72.5% (w/w) (e.g. about 70, 71 or 72%).

Liquid food products may require the use of a thickening or gelling agent to generate a product with a desired consistency. For instance, it is often desirable to add agents to food formulations to increase the viscosity of the end product. Examples of such end products include yoghurts, desserts and gel products consumed by sports people. It will be appreciated that the thickened liquids need to be of a particular, known and repeatable viscosity. Such products are typically pre-prepared by mixing the foodstuff with an agent that regulates viscosity before packaging, and providing the final thickened product already packaged. However it is often difficult to properly mix the agent into the product and this also increases the risk of clumps forming which will result in lumpy end products. This risk is even greater when a product contains proteins and the inventors have found that mixing of a product, at a desired consistency/viscosity, is even more problematic when a high concentration of total protein (for instance around or over 20% (w/w)) is desired and particularly problematic when a product is required that comprises 10% (w/w) or more (for instance 15%, 16%, 17% or 18%) of Whey protein.

The inventors attempted to formulate whey protein and casein into liquid nutritional compositions according to the first aspect of the invention using a number of agents that may be used to adjust viscosity or consistency of the composition. They found that pectins were particularly useful and in a preferred embodiment of the invention the composition comprises whey protein, casein and a pectin. It will be appreciated that other polysaccharides rich in d-galacturonic acid may be used for this purpose.

It is preferred that a high methoxyl pectin is used. It is also preferred that a pectin is used which is optimized for use in acidified milk products. Such pectins are available from a number of commercial sources. One source of pectin that may be used according to the invention is Grindsted® Pectin AMD 783 from Danisco. A most preferred pectin for use according to the invention is Milazzo™ BV 1098 pectin from FMCBioPolymer.

The composition may comprise about 0.1-1.5% (w/w) of the pectin. In one embodiment the composition may comprise about 0.25-1.0% (w/w) of the pectin and more preferably about 0.3-0.6% (w/w). In another embodiment the composition may comprise about 0.2-0.6% (w/w). It is preferred that the composition comprises about 0.40-0.45% (w/w) of the pectin.

In a preferred embodiment of the invention a sufficient amount of an agent for adjusting viscosity or consistency (e.g. a pectin) is used to adjust the final viscosity/consistency of the composition such that it flows less than 20cms (after 30 seconds, at 20°C) on a Bostwick Consistometer and more preferred that a composition according to the invention flows less than 15cms.

In one embodiment sufficient pectin is added such that a newly manufactured composition flows 5 - 15 cms (after 30 seconds, at 20°C) on a Bostwick Consistometer, preferably such that the composition flows 6 - 14 cms and more preferably the composition will flow 12.5 ± 1cm on a Bostwick Consistometer. For instance the composition may flow about 12.6 cms on a Bostwick Consistometer.

According to another embodiment sufficient pectin as added such that a stored composition according to the invention will flow 5 - 15 cms (after 30 seconds, at 20°C) on a Bostwick Consistometer. Such a composition may flow between about 5 and 10cms, and most preferably such a composition flows 6.0 ± 1 cm or about 7.5cms (after 30 seconds, at 20°C).

It will be appreciated that the exact amount of an agent required to form a composition of these consistencies will depend upon the exact amounts of other ingredients (including the protein content) and also which pectin is employed. By way of example, a preferred composition according to the invention will comprise between about 0.3-0.6% (w/w) or about 0.2-0.6% (w/w) of Milazzo™ BV 1098 pectin from FMCBioPolymer and most preferably about 0.40-0.45% (w/w) of Milazzo™ BV 1098 pectin (e.g. 0.403%).

Compositions according to the invention can also include one or more buffering agents, pH-adjusting agents (e.g. acidifiers), preservatives, flavouring and sweeteners.

An acidifier for use according to the invention may be selected from the group consisting of phosphoric acid, citric acid, phosphoric-citric acid, malic acid, glucono-delta-lactone acid, hydrochloric acid, lactic acid, fumaric acid or tartaric acid

A preferred preservative and acidifier for use in the composition is citric acid. Compositions may comprise 0.1-1.5% (w/w) of citric acid, about 0.25-1.25% (w/w) of citric acid or about 0.65-0.90% (w/w) of citric acid. A most preferred composition comprises about 0.77% (w/w) of citric acid.

In preferred embodiments, the citric acid (or other acidifier) is included in the composition as a means of adjusting the pH of the final product. The composition may have a pH which is between pH 2.5 and pH 4.5, including between pH 3.0 and pH 4.0. In a preferred embodiment the pH is between pH 3.5 and pH 4.0 and more preferably between about pH 3.75 and pH 3.90.

Another preferred preservative for use in the composition is potassium sorbate. Compositions may comprise 0.001-0.06% (w/w) of potassium sorbate, about 0.01-0.05% (w/w) of potassium sorbate or about 0.02-0.04% (w/w) of potassium sorbate. A most preferred composition comprises about 0.04% (w/w) of potassium sorbate.

The composition of the first aspect of the invention may include one or more sweeteners. Preferred sweeteners for use in the composition include Acesulfame K and Sucralose. Compositions may comprise 0.001-0.05% (w/w) of Acesulfame K or Sucralose, about 0.01-0.04% (w/w) of Acesulfame K or Sucralose or about 0.02-0.04% (w/w) of Acesulfame K or Sucralose. A most preferred composition comprises about 0.035% (w/w) of Acesulfame K and about 0.035% (w/w) of Sucralose.

Flavouring may be chosen to prepare a product of a chosen taste. For instance preferred compositions are lemon or strawberry flavoured. Alternatively blackcurrant, orange or tropical flavours may be used.

A skilled person will appreciate that a variety of ingredients are available to the food industry and that many of the abovementioned buffering agents, pH-adjusting agents, preservatives, flavouring and sweeteners may be readily interchanged with equivalent ingredients.

### Preferred Compositions According to the first Aspect of the Invention

In a preferred embodiment the composition comprises 15 - 25% (w/w) whey protein and 4-6% (w/w) casein. It is preferred that the composition comprises 15 - 20% (w/w) whey protein and 4-6% (w/w) casein; more preferred that the composition comprises 16 - 19% (w/w) whey protein and 4.25-5.50% (w/w) casein; and even more preferred that the composition comprises about 17-18% (w/w) whey protein and about 4.5-5.0% (w/w) casein.

Preferred compositions comprise 20-25% (w/w) total protein (i.e. whey protein + casein + any other protein/peptide/amino acid content.) and it is more preferred that such compositions comprise about 20-24% total protein.

Most preferred compositions comprise 20-25% (w/w) total protein wherein the total protein comprises, or essentially comprises (e.g. 80% or more), whey protein + casein only. It is preferred that such compositions comprise about 20-22% (w/w) whey protein + casein.

Preferred embodiments of the composition of the invention comprise a whey protein hydrolysate as the source of whey protein and a quark powder as a source of casein. Preferred compositions comprise 17.5 - 25% (w/w) whey protein hydrolysate and 6-8% (w/w) quark powder. It is more preferred that the composition comprises about 20% (w/w) whey protein hydrolysate and about 6.8% (w/w) quark powder.

In one preferred embodiment the composition also comprises a pectin. It is preferred that such compositions comprise 15 - 25% (w/w) whey protein, about 4.5-5.0% (w/w) casein and about 0.2-0.6% (w/w) or about 0.3-0.6% (w/w) of the pectin.

A preferred composition comprises about 17.4% (w/w) whey protein, about 4.79 % (w/w) casein and about 0.45%(w/w) of pectin; or about 20.2% (w/w) whey protein hydrolysate, about 6.8 % (w/w) quark powder and about 0.45%(w/w) of pectin.

Another preferred composition comprises about 17.3% (w/w) whey protein, about 4.72 % (w/w) casein and about 0.40%(w/w) of pectin; or about 20.2% (w/w) whey protein hydrolysate, about 6.7 % (w/w) quark powder and about 0.40%(w/w) of pectin.

In another preferred embodiment the composition comprises whey protein, casein, a pectin, water and at least one ingredient selected from a preservative, pH adjusting agent, a sweetener and flavouring. It is more preferred that the composition comprises whey protein, casein, a pectin, water, at least one preservative, at least one sweetener and flavouring.

A most preferred composition according to the first aspect of the invention may have ingredients in the ranges specified in Table 1.

**Table 1:**

| **Ingredients** | **%(w/w)** |
|---|---|
| Water | 65-75 |
| Whey Protein Hydrolysate | 17-25 |
| Quark Powder | 6-8 |
| Citric Acid | 0.65-0.90 |
| Flavouring | 0.65-0.90 |
| Pectin | 0.3-0.6 |
| Potassium Sorbate | 0.02-0.04 |
| Acesulfame K | 0.02-0.035 |
| Sucralose | 0.02-0.035 |

### Dosing Regimens

The quantity of the composition according to the invention that needs to be administered to a subject will depend upon a number of factors. For instance the amount required for an athlete in training will depend upon the type of exercise undertaken or to be undertaken; the duration of an exercise regimen; the level of fitness of the person and also factors such as the age, sex and weight of the subject. It will be appreciated that there are other situations where compositions according to the invention may be given to patients in need of treatment. Such patients may include people with a muscle wasting disease and/or those who are forced to be immobile and thereby risk muscular degeneration. The exact quantity of a composition according to the invention that would be required by such patients would depend upon the patient's condition and should be recommended by their physician.

Nevertheless, as a general guide, it is known to the art that a subject wishing to optimise muscle development and/or wishing to maintain lean muscle could benefit from receiving about 20g of protein/amino acids every 3-4 hours. Accordingly a sufficient amount of the composition according to the first aspect of the invention may be consumed every 3 -4 hours to provide such amounts of protein/amino acids.

It is preferred that compositions according to the invention are packaged (e.g. in sachet) to provide sufficient volume to provide a predetermined dose form. Sachets may comprise 30-200ml of composition according to the invention, preferably 40-150ml of the composition, more preferably 40-120ml of the composition more preferably 40-100ml of the composition and most preferably the sachet comprises about 77ml or about 75-80ml of the composition. Such sachets may comprise a composition according to the invention in which the amount of whey protein and casein has been adjusted such that a single sachet will deliver about 20-25g of total protein, Such sachets may be consumed at intervals of about 3-4 hours.

The composition may be packaged as 30-200g aliquots, preferably 40-150g aliquots, more preferably 40-120g aliquots, more preferably 40-100g aliquots and most preferably 75-95g aliquots or about 85g aliquots.

Such sachets (and compositions contained within equivalent packaging) represent an important feature of the present invention. Therefore according to a second aspect of the invention there is provided a nutritional product comprising a composition according to the first aspect of the invention and containing 20-25g of total protein.

A preferred product according to the second aspect of the invention is a sachet comprising 85g of preferred compositions according to the first aspect of the invention (For example the compositions described in Example 2 or 3). When consumed such a product will deliver total protein (primarily whey protein + casein) of about 22g and will be in a form of a single, easily consumed liquid. One product according to the second aspect of the invention may be consumed every 3-4 hours by a subject or as otherwise directed by a sports nutritionist or physician.

### Methods

According to a third aspect of the invention there is a provided a method of manufacturing a liquid nutritional composition comprising at least about 20% (w/w) total protein, at least 10% (w/w) whey protein and about 1-12% (w/w) casein, the method comprising the steps of:
1. Adding water to a mix tank and heating to at least 60°C;
2. Adding Pectin and mixing with agitation;
3. Cooling to 60°C or below;
4. Adding Whey Protein Hydrolysate and mixing with agitation;
5. Agitating to allow hydration of whey proteins;
6. Adding a powder comprising casein and mixing with agitation;
7. Adding acidifier to the mix tank to a final pH of 3.0 - 5.0;
8. Heating to at least 80°C, mixing and agitating and then holding for at least one minute;
9. Cool to 30°C or below;
10. Further mixing; and
11. Optionally pack off product.

It is preferred that the method of the invention is used to manufacture liquid nutritional compositions according to the first aspect of the invention.

It is more preferred that the method is used to manufacture compositions defined by Table 1 and most preferred that the method is used to manufacture the composition defined by Tables 2 or 3.

Water and other ingredients (which are preferably added as powders) are weighed out and added to a tank to make a batch of the liquid nutritional composition. For instance the water and ingredients may be weighed out in order that the final composition (produced after step 10) has the % (w/w) of ingredients as defined in Tables 1, 2 or 3.

The water, preferably deionised water, is added to the tank in step 1 is and it is preferred that the tank is heated to between 60 and 70°C.

It is preferred that the pectin used in step 2 is Milazzo™ BV 1098 pectin from FMCBioPolymer or an equivalent thereof. The mixing and agitation may be by use of a high shear mixing device and should be carried out for 1-20 minutes, preferably 2-10 minutes and most preferably for about 5 minutes.

In a preferred embodiment step 2 may further include blending any preservatives (e.g. Potassium Sorbate) or sweeteners (e.g. Acesulfame K and/or Sucralose) with the pectin. Such ingredients may be blended, before, while or after they have been added to the mix tank. In alternative embodiments ingredients such as preservatives and sweeteners may be added during step 4 or 6.

Step 3 requires the solution containing pectin to be cooled to 60°C or below. In a preferred embodiment the solution is cooled to 55 -60°C. The inventors have found that it is important to control the temperature at this step when it is desired to dissolve at least 10% Whey Protein Hydrolysate, or more preferably about 20% Whey Protein Hydrolysate, in the composition while at the same time avoiding clumping of the protein.

In step 4 it is preferred that the Whey Protein Hydrolysate is added under vacuum and then mixed and agitated under vacuum (preferably about 0.5bar). The inventors have found that foaming of the protein is a particular problem when attempting to make high protein liquid compositions and found that optimal mixing and agitation is best achieved under vacuum and utilizing a high shear mixing device (e.g. a 1500 litre high-sheer mixing vessel from Limitech Limited). This step should be carried out for 1-10 minutes, preferably 2-5 minutes and most preferably for about 3 minutes. It is most preferred that when the Whey Protein Hydrolysate is LACPRODAN® HYDRO.Gel (Aria Foods Ingredients, Denmark) that it is added under vacuum and then mixed and agitated under vacuum (0.5bar) for 3 minutes.

After mixing according to step 4, the mix should be agitated for a sufficient amount of time to allow hydration of whey proteins (step 5). The inventors have found that 15-45 minutes represents sufficient time for this to occur and it is preferred that the mix is agitated for about 30 minutes when the Whey Protein Hydrolysate is LACPRODAN® HYDRO.Gel.

In step 6 it is preferred that the powder comprising casein is a quark powder and it is added under vacuum and then mixed and agitated under vacuum (preferably about 0.5bar). The mixing and agitation may be by use of a high shear mixing device and should be carried out for 1-10 minutes, preferably 3-7 minutes and most preferably for about 5 minutes. It is most preferred that the quark powder is a spray-dried powder of pure skim quark available from Molda (published by Molda under specification 840150001) or an equivalent thereof. It is most preferred that when the quark powder is a spray-dried powder of pure skim quark available from Molda that it is added under vacuum and then mixed and agitated under vacuum (0.5bar) for 5 minutes.

The conditions chosen for steps 4-6 represent important features of the method of the invention. The inventors exerted a lot of effort to establish conditions that would avoid clumping and also avoid foaming of the protein when it was added to a liquid to form a flowable composition with at least 20% (w/w) total protein.

Optionally any flavouring may be blended with the casein during step 6. Alternatively the flavouring may be added during step 4.

In step 7 it is preferred that citric acid is used as an acidifier and also preferred that sufficient acidifier (e.g citric acid) is added to adjust the final pH of the composition to pH 3.75- pH 3.90.

In step 8 the temperature needs to be raised to a high enough temperature to attenuate, or preferably destroy, any micro-organisms in the batch. The inventors found that this was achieved, while maintaining the protein in the liquid, if the temperature is raised to at least 80°C and more preferably raised to 80°C. The liquid should be held at temperature for at least one minute, preferably at least 3 minutes and more preferable for about 5 minutes.

In step 9 the composition is preferably agitated and high shear mixed every 5 minutes (for about 30 seconds) while the composition cools to the required temperature.

In step 10 the composition is preferably high shear mixed for about 10 minutes under vacuum (preferably about 0.5bar).

The packing step (step 11) may involve packaging the composition into sachets as about 75-80 ml aliquots, about 77ml aliquots, 75-90g aliquots, or about 85g aliquots.

A preferred embodiment of the method of the third aspect of the invention comprises the steps of:
1. adding water to a mix tank and heating to 60°C to 70°C;
2. blending Potassium Sorbate, Acesulfame K, Sucralose and Pectin and adding to the mix tank, then high shear mixing and agitation for 5 minutes;
3. cooling to 60°C;
4. adding Whey Protein Hydrolysate under vacuum, then high shear mixing and agitation for 3 minutes (0.5bar vacuum);
5. further agitating for 30 minutes;
6. adding Quark powder and flavouring under vacuum, then high shear mixing and agitating for 5 minutes (0.5bar vacuum);
7. adding Citric Acid to the tank to a final pH of 3.75 - 3.90;
8. heating to 80°C with mixing and agitating and then holding for 5 minutes;
9. cooling to 20°C to 30°C while agitating and high shear mixing every 5 minutes for 30 seconds until cooled to required temperature;
10. high shear mixing for 10 minutes under vacuum; and
11. optionally pack off product.

A most preferred embodiment of the method according to the third aspect of the invention is described in Example 1.

### Other aspects of the invention

Disclosed herein are methods of promoting muscle growth or recovery following exercise comprising administering to a subject in need of treatment a composition according to the first aspect of the invention.

Disclosed herein are methods of preventing, muscle degeneration in a subject comprising administering to a subject in need of treatment a composition according to the first aspect of the invention

Disclosed herein is the use of a composition according to the first aspect of the invention in the manufacture of a medicament for promoting muscle growth or recovery following exercise in a subject.

According to another aspect of the present invention there is provided a composition according to the first aspect of the invention or a nutritional product according to the second aspect of the invention for use as a nutritional supplement or medicament for promoting muscle growth, promoting recovery following exercise or preventing muscle degeneration in a subject

The invention will now be illustrated, but not limited, by the following examples.

### Example 1: A process for manufacturing a composition according to the first aspect of the invention.

### 1.1 Ingredients

LACPRODAN® HYDRO.Gel (available from Aria Foods Ingredients, Denmark) was used as a partially hydrolysed source of whey protein.

A spray-dried powder of pure skim quark (availalable from Molda and specification published by Molda under article 840150001) was used as a source of casein.

Milazzo™ BV 1098 pectin (available from FMCBioPolymer) was used a source of pectin.

Deonised water, Potassium Sorbate, Acesulfame K, Sucralose and Citric Acid were all sourced from standard suppliers.

### 1.2 Equipment

The mixing and processing (as described in 1.3) was carried out in one vessel, a 1500 litre high-sheer mixing vessel from Limitech Limited (a mixing vessel well know to the art). The vessel has the ability to mix, heat, cool and process under vacuum. The mixing can be high shear or gentle agitation. Heating is performed using a steam jacket. Cooling is performed using chilled water. Powders may be added using a vacuum to ensure quick and effective dispersion.

### 1.3 Procedure

A composition according to the first aspect of the invention was manufactured by adopting the following protocol:
1. Add deionised water and heat to 60°C to 70°C
2. Blend Potassium Sorbate, Acesulfame K, Sucralose and Pectin and add to mix tank. High shear mix and agitate for 5 minutes
3. Cool to 60°C
4. Add Whey Protein Hydrolysate under vacuum. High shear mix and agitate for 3 minutes, 0.5bar vacuum
5. Agitate for 30 minutes for hydration of whey proteins
6. Add Quark and Flavour under vacuum. High shear mix and agitate for 5 minutes, 0.5bar vacuum
7. Add Citric Acid to tank to a final pH of 3.75 - 3.90
8. Heat to 80°C, mixing and agitating
9. Hold for 5 minutes
10. Cool to 20°C to 30°C, agitating and high shear mixing every 5 minutes for 30 seconds until cooled to required temperature
11. High shear mix for 10 minutes under vacuum
12. Pack off product

With the exception of the deionised water, all ingredients were used as powders and added to the vessel in sufficient quantities to make1,000kg of the composition defined in Table 2.

This procedure represents a most preferred method according to the third aspect of the invention.

### Example 2: A Liquid nutritional composition according to the first aspect of the invention.

A Liquid nutritional composition according to the first aspect of the invention was made according to the method outlined in Example 1 and with a final composition as listed in table 2.

**Table 2:**

| **Ingredients** | **%(w/w)** |
|---|---|
| Water | 70.863 |
| Whey Protein Hydrolysate (86% protein as is) | 20.214 |
| Quark Powder (70.3% protein dm) | 6.814 |
| Citric Acid | 0.772 |
| Flavouring | 0.772 |
| Pectin | 0.454 |
| Potassium Sorbate | 0.040 |
| Acesulfame K | 0.035 |
| Sucralose | 0.035 |

The composition was packed into an 85g sachet and represents a product that can be easily kept in a kit bag, desk draw, hand bag or even a pocket. Accordingly a novel product is being made available that is of a convenient "on the go" size into which has been incorporated 22g of total protein. The total protein primarily comprises whey protein and casein and the inventors have been able to surprisingly incorporate a high concentration of whey protein (17.4% (w/w) in the case of the product of Example 2) into a liquid nutritional product.

### Example 3: A Liquid nutritional composition according to the first aspect of the invention.

The applicant scaled-up the manufacturing process to produce 900kg batches of a liquid nutritional composition according to the first aspect of the invention. Lemon or Strawberry flavoured batches were made according to the method outlined in Example 1 and with a final composition as listed in table 3.

**Table 3:**

| **Ingredients** | **Quantity required in Kg** |
|---|---|
| Water | 635.00 |
| Whey Protein Hydrolysate (86% protein as is) | 180.00 |
| Quark Powder (70.3% protein dm) | 60.000 |
| Citric Acid | 6.500 |
| Flavouring (lemon or strawberry) | 7.000 |
| Pectin | 3.600 |
| Potassium Sorbate | 0.350 |
| Acesulfame K | 0.300 |
| Sucralose | 0.300 |
| **Total Kg** | **893.050** |

The composition was also packed into 85g sachets and represents a product that can be easily kept in a kit bag, desk draw, hand bag or even a pocket and is particularly useful for use by athletes or patients "on the go". The total protein primarily comprises whey protein and casein and the inventors have been able to surprisingly incorporate a high concentration of whey protein (17.3% (w/w) in the case of the product of Example 3) into a liquid nutritional product.

## Claims

1. A liquid nutritional composition comprising at least about 20% (w/w of the composition) total protein and wherein the composition comprises 10-40% (w/w of the composition) whey protein, and 1 -12% (w/w of the composition) of casein.

2. The liquid nutritional composition according to claim 1 comprising between 15 and 25% (w/w of the composition) of whey protein.

3. The liquid nutritional composition according to claim 1 or 2 comprising between 3 and 7% (w/w of the composition) of casein.

4. The liquid nutritional composition according to any preceding claim wherein the whey protein is derived from a whey protein hydrolysate.

5. The liquid nutritional composition according to any preceding claim wherein the casein is derived from quark powder.

6. The liquid nutritional composition according to any preceding claim further comprising a pectin.

7. The liquid nutritional composition according to claim 6 wherein the composition comprises about 0.3-0.6% (w/w of the composition) of the pectin.

8. The liquid nutritional composition according to any preceding claim wherein the composition has a consistency such that the composition flows less than 15 cms after 30 seconds, at 20°C on a Bostwick Consistometer.

9. The liquid nutritional composition according to any preceding claim comprising 16.00 - 19.00% (w/w of the composition) whey protein and 4.25-5.50% (w/w of the composition) casein.

10. The liquid nutritional composition according to any preceding claim further comprising one or more ingredients selected from the group comprising buffering agents, pH-adjusting agents, preservatives, flavouring and sweeteners.

11. The liquid nutritional composition according to claim 10 wherein the one or more ingredients are selected from the group comprising citric acid, Potassium Sorbate, Acesulfame K, Sucralose and flavouring.

12. A method of manufacturing a liquid nutritional composition according to any one of claims 1-11, the method comprising the steps of:
1. Adding water to a mix tank and heating to at least 60°C;
2. Adding Pectin and mixing with agitation;
3. Cooling to 60°C or below;
4. Adding Whey Protein Hydrolysate and mixing with agitation;
5. Agitating to allow hydration of whey proteins;
6. Adding casein and mixing with agitation;
7. Adding acidifier to the mix tank to a final pH of 3.0 - 5.0;
8. Heating to 80°C, mixing and agitating and then holding for at least 1 minute
9. Cool to 20°C to 30°C;
10. Further mixing; and
11. Optionally pack off product

13. A nutritional product comprising a composition according to any one of claims 1-11 and containing about 20-25g of total protein.

14. The nutritional product according to claim 13 comprising a sachet with a tear off top which, in use, may be torn off and the contents of the sachet squeezed into a consumer's mouth.

15. The nutritional product according to claim 13 or 14 comprising between about 40 - 100mls of the liquid nutritional composition.

16. A composition according to to any one of claims 1-11 or a nutritional product according to any one of claims 13-15 for use as a nutritional supplement or medicament for promoting muscle growth, promoting recovery following exercise or preventing muscle degeneration in a subject.

## Patentansprüche

1. Flüssige Ernährungszusammensetzung, umfassend mindestens 20 % (Massenanteil der Zusammensetzung) Gesamtprotein, und wobei die Zusammensetzung 10 - 40 % (Massenanteil der Zusammensetzung) Molkenprotein und 1 -12 % (Massenanteil der Zusammensetzung) Casein umfasst.

2. Flüssige Ernährungszusammensetzung nach Anspruch 1, umfassend zwischen 15 und 25 % (Massenanteil der Zusammensetzung) Molkenprotein.

3. Flüssige Ernährungszusammensetzung nach Anspruch 1 oder 2, umfassend zwischen 3 und 7 % (Massenanteil der Zusammensetzung) Casein.

4. Flüssige Ernährungszusammensetzung nach einem der vorstehenden Ansprüche, wobei das Molkenprotein von einem Molkenproteinhydrolysat stammt.

5. Flüssige Ernährungszusammensetzung nach einem der vorstehenden Ansprüche, wobei das Casein von Quarkpulver stammt.

6. Flüssige Ernährungszusammensetzung nach einem der vorstehenden Ansprüche, ferner umfassend ein Pektin.

7. Flüssige Ernährungszusammensetzung nach Anspruch 6, wobei die Zusammensetzung 0,3-0,6 % (Massenanteil der Zusammensetzung) Pektin umfasst.

8. Flüssige Ernährungszusammensetzung nach einem der vorstehenden Ansprüche, wobei die Zusammensetzung eine derartige Konsistenz aufweist, dass die Zusammensetzung weniger als 15 cm nach 30 Sekunden bei 20 °C auf einem Bostwick-Consistometer fließt.

9. Flüssige Ernährungszusammensetzung nach einem der vorstehenden Ansprüche, umfassend 16,00 - 19,00 % (Massenanteil der Zusammensetzung) Molkenprotein und 4,25 - 5,50 % (Massenanteil der Zusammensetzung) Casein.

10. Flüssige Ernährungszusammensetzung nach einem der vorstehenden Ansprüche, ferner umfassend einen oder mehrere Inhaltsstoffe, die aus der Gruppe ausgewählt sind, die Puffersubstanzen, Mittel zur Einstellung des pH-Wertes, Konservierungsmittel, Aromastoffe und Süßungsmittel umfasst.

11. Flüssige Ernährungszusammensetzung nach Anspruch 10, wobei der eine oder die mehreren Inhaltsstoffe aus der Gruppe ausgewählt sind, die Zitronensäure, Kaliumsorbat, Acesulfam-K, Sucralose und Aromastoffe umfasst.

12. Verfahren zum Herstellen einer flüssigen Ernährungszusammensetzung nach einem der Ansprüche 1-11, wobei das Verfahren die folgenden Schritte umfasst:
1. Zugeben von Wasser zu einem Mischbehälter und Erwärmen auf mindestens 60 °C;
2. Zugeben von Pektin und Mischen unter Rühren;
3. Kühlen auf 60 °C oder darunter;
4. Zugeben von Molkenproteinhydrolysat und Mischen unter Rühren;
5. Rühren, um die Hydrierung der Molkenproteine zu ermöglichen;
6. Zugeben von Casein und Mischen unter Rühren;
7. Zugeben eines Säuerungsmittels zum Mischbehälter bis zu einem endgültigen pH-Wert von 3,0 - 5,0;
8. Erwärmen auf 80 °C, Mischen und Rühren und dann Halten für mindestens 1 Minute
9. Abkühlen auf 20 °C bis 30 °C;
10. Weiteres Mischen; und
11. Optionales Abpacken des Produkts.

13. Ernährungsprodukt, umfassend eine Zusammensetzung nach einem der Ansprüche 1-11 und enthaltend 20-25 g Gesamtprotein.

14. Ernährungsprodukt nach Anspruch 13, umfassend einen Beutel mit einer abreißbaren Oberseite, die bei Gebrauch abgerissen werden kann und wobei der Inhalt des Beutels in den Mund eines Verbrauchers gedrückt werden kann.

15. Ernährungsprodukt nach Anspruch 13 oder 14, umfassend zwischen 40 - 100 ml der flüssigen Ernährungszusammensetzung.

16. Zusammensetzung nach einem der Ansprüche 1-11 oder ein Ernährungsprodukt nach einem der Ansprüche 13-15 zur Verwendung als ein Nahrungsergänzungsmittel oder Medikament zum Fördern des Muskelwachstums, Fördern der Erholung nach dem Sport oder Vorbeugen der Muskeldegeneration bei einem Individuum.

## Revendications

1. Composition nutritionnelle liquide comprenant au moins 20 % (p/p de la composition) de protéine totale et dans laquelle la composition comprend 10 à 40 % (p/p de la composition) de protéine de lactosérum, et 1 à 12 % (p/p de la composition) de caséine.

2. Composition nutritionnelle liquide selon la revendication 1 comprenant entre 15 et 25 % (p/p de la composition) de protéine de lactosérum.

3. Composition nutritionnelle liquide selon la revendication 1 ou 2 comprenant entre 3 et 7 % (p/p de la composition) de caséine.

4. Composition nutritionnelle liquide selon l'une quelconque des revendications précédentes dans laquelle la protéine de lactosérum est dérivée d'un hydrolysate de protéine de lactosérum.

5. Composition nutritionnelle liquide selon l'une quelconque des revendications précédentes dans laquelle la caséine est dérivée de la poudre de fromage blanc.

6. Composition nutritionnelle liquide selon l'une quelconque des revendications précédentes comprenant en outre une pectine.

7. Composition nutritionnelle liquide selon la revendication 6 dans laquelle la composition comprend 0,3 à 0,6 % (p/p de la composition) de la pectine.

8. Composition nutritionnelle liquide selon l'une quelconque des revendications précédentes, dans laquelle la composition a une consistance telle que la composition s'écoule de moins de 15 cm après 30 secondes, à 20 °C sur un consistomètre de Bostwick.

9. Composition nutritionnelle liquide selon l'une quelconque des revendications précédentes comprenant 16,00 à 19,00 % (p/p de la composition) de protéine de lactosérum et 4,25 à 5,50 % (p/p de la composition) de caséine.

10. Composition nutritionnelle liquide selon l'une quelconque des revendications précédentes comprenant en outre un ou plusieurs ingrédients choisis dans le groupe comprenant des agents tampons, des agents d'ajustement du pH, des conservateurs, des aromatisants et des édulcorants.

11. Composition nutritionnelle liquide selon la revendication 10 dans laquelle un ou plusieurs ingrédients sont choisis dans le groupe comprenant acide citrique, sorbate de potassium, acésulfame K, sucralose et aromatisant.

12. Procédé de fabrication d'une composition nutritionnelle liquide selon l'une quelconque des revendications 1 à 11, le procédé comprenant les étapes :
1. Ajout d'eau dans une cuve de mélange et chauffage à au moins 60 °C ;
2. Ajout de pectine et mélange avec agitation ;
3. Refroidissement à 60 °C ou moins ;
4. Ajout d'hydrolysate de protéine de lactosérum et mélange avec agitation ;
5. Agitation pour permettre l'hydratation des protéines de lactosérum ;
6. Ajout de caséine et mélange avec agitation ;
7. Ajout d'acidifiant dans la cuve de mélange jusqu'à un pH final de 3,0 à 5,0 ;
8. Chauffage à 80 °C, mélange et agitation, puis maintien pendant au moins 1 minute ;
9. Refroidissement à 20 °C à 30°C ;
10. Mélange supplémentaire ; et
11. Eventuellement emballage du produit.

13. Produit nutritionnel comprenant une composition selon l'une quelconque des revendications 1 à 11 et contenant 20 à 25 g de protéine totale.

14. Produit nutritionnel selon la revendication 13 comprenant un sachet avec une partie supérieure déchirable qui, lors de l'utilisation, peut être déchirée et le contenu du sachet être pressé dans la bouche du consommateur.

15. Produit nutritionnel selon la revendication 13 ou 14 comprenant entre 40 et 100 ml de la composition nutritionnelle liquide.

16. Composition selon l'une quelconque des revendications 1 à 11 ou produit nutritionnel selon l'une quelconque des revendications 13 à 15 pour utilisation comme supplément nutritionnel ou médicament visant à favoriser la croissance musculaire, promouvoir la récupération après un exercice ou prévenir la dégénérescence musculaire chez un sujet.
